# EUROPÄISCHE PATENTSCHRIFT

(11) **EP 0 671 198 B1**
(45) Veröffentlichungstag und Bekanntmachung des Hinweises auf die Patenterteilung: **27.08.1997**
(21) Anmeldenummer: 94810142.3
(22) Anmeldetag: 07.03.1994
(51) Int. Cl.: B01D 25/26, B01D 46/12

(54) **Einrichtung zur Filtrierung von fluiden Medien**
Device for filtering fluids
Dispositif pour filtrer des fluides

(43) Veröffentlichungstag der Anmeldung: 13.09.1995
(73) Patentinhaber: ING. A. MAURER SA, CH-3013 Bern (CH)
(72) Erfinder: Trumpf, Rudolf, CH-3013 Bern (CH); Jost, Hans, CH-3114 Wichtrach (CH)
(74) Vertreter: Tschudi, Lorenz

(56) Entgegenhaltungen:
- EP-A- 0 378 192
- DE-A- 1 761 325
- DE-A- 3 239 687
- DE-A- 3 403 738
- US-A- 3 994 810

## Beschreibung

Die Erfindung betrifft eine Einrichtung zur Filtrierung von fluiden Medien gemäss dem Oberbegriff des Patentanspruchs 1. Derartige Einrichtungen sind insbesondere geeignet, Medien erhöhter Viskosität, und im speziellen solche, welche zur Sedimentation, Koagulation, Kristallisation oder Gelbildung neigen, oder Suspensionen, die in toten Winkeln zur Sedimentation neigen, was in der Lebensmittelindustrie ein bekanntes Problem bildet, zu filtrieren.

Einrichtungen dieser Art sind bekannt. So zeigt beispielsweise die EP-A 0 378 192 eine Einrichtung zur Filtrierung insbesondere von Wasser, die aus Einströmräumen und Ausströmräumen gebildet ist, zwischen welchen ein Filterelement eingesetzt ist, welches die einzelnen Einströmräume und die entsprechenden Ausströmräume unterteilt. Während des Filtriervorganges durchströmt das zu filtrierende Medium jeweils einen Einströmraum, das entsprechende Filterelement und den Ausströmraum. Hierbei ändert sich die Durchströmgeschwindigkeit, da sich der Durchströmquerschnitt ändert. Dadurch können Räume entstehen, in welchen sich das zu filtrierende Medium überdurchschnittlich lange aufhält. Bei fluiden Medien, die zur Sedimentation, Koagulation, Kristallisation oder Gelbildung neigen, besteht dadurch die Gefahr, dass ein derartiger Vorgang eintritt, was dann zu Verstopfungen der Einrichtung fuhren kann, welche in aufwendiger meist manueller Arbeit eliminiert werden müssen.

Auch die US-PS 3 994 810 zeigt eine ähnliche Einrichtung, wobei diese eine zylinderförmige erste Kammer aufweist, in welche das zu filtrierende Medium über einen Einlauf zugeführt wird. In der Wandung der zylinderförmigen ersten Kammer sind Durchgangsöffnungen angebracht, hinter welchen das Filtergewebe angeordnet ist, welches ebenfalls im wesentlichen zylinderförmig gestaltet ist. Das zylinderförmige Filtergewebe ist von einer zweiten Kammer umgeben, die mit einem Auslauf ausgestattet ist.

Das zu filtrierende Medium gelangt über den Einlauf und die erste Kammer durch die Durchgangsöffnungen vor den Filter, durchdringt diesen und gelangt über die zweite Kammer in den Auslauf. Hierbei ist festgestellt worden, dass der Filter ungleichmässig durchströmt wird, da das Medium den Weg des geringsten Widerstandes wählt, welches dem direkten Weg zwischen Eintritts- und Austrittsstutzen entspricht. In den schwächer durchströmten Bereichen bilden sich Ablagerungen, resp. koaguliert das Medium. Dadurch ergibt sich ein Verlust an aktiver Filterfläche.

Je nach Produktionsbedingungen kann die Durchflussmenge variieren. Hierbei hat es sich gezeigt, dass bei kleinem Durchströmvolumen der Bereich, in dem sich koaguliertes Medium absetzt, grösser wird.

Bei Erhöhung der Durchflussmenge bauen sich diese Ablagerungen wieder ab. Das abgebaute Material fliesst dann teilweise wieder als Verunreinigung im filtrierten Mediumstrom mit und kann zu Betriebsstörungen in nachfolgenden weiteren Verarbeitungsverfahren führen.

Ein weiteres Problem ergibt sich aus der Verwendung des perforierten Tragrohres. Die Filterringe werden lediglich im Bereiche der Perforation richtig durchströmt. Hierdurch entstehen Strömungsschatten, in welchen das Medium koagulieren kann. Die dadurch abgelagerten Feststoffe können durch das Rückspülverfahren nicht mehr abgebaut werden. Das ergibt einen bedeutenden Verlust an aktiver Filterfläche.

Es sind auch weitere Einrichtungen zur Filtrierung von fluiden Medien bekannt, welche ähnlich aufgebaut sind, wie die vorgängig genannte Einrichtung. Hierbei wird das Filtergewebe direkt auf ein perforiertes Rohr aufgespannt. In diesem Fall wird das Filtergewebe während dem Filtrierbetrieb wie ein Ballon aufgeblasen, so dass es vom Tragrohr abhebt. Dabei kann sich Feststoff zwischen dem nicht perforierten Bereich des Tragrohres und dem Filtergewebe aufbauen. Bei der Rückspülung wird das Filtergewebe wieder auf das Tragrohr gepresst, wobei der abgelagerte Feststoff in das Filtergewebe hineingepresst wird. Dieses kann mittels der Rückspülung nicht mehr entfernt werden. Für die Reinigung des Filtergewebes sind dann anspruchsvolle und aufwendige thermische Verfahren notwendig.

Die Aufgabe der Erfindung besteht nun darin, eine Einrichtung zur Filtrierung von fluiden Medien zu schaffen, bei welcher das zu filtrierende Medium auch bei veränderter Durchflussmenge in einem kontinuierlichen Fluss gehalten wird, welche keine Bereiche aufweist, in denen das Medium über einen längeren Zeitbereich verweilen kann, und bei welchem das eingesetzte Filtergewebe praktisch vollflächig ausgenutzt werden kann.

Die Lösung dieser Aufgabe erfolgt erfindungsgemäss durch die in der Kennzeichnung des Anspruchs 1 angegebenen Merkmale.

Mit dieser Ausgestaltung der Einrichtung zur Filtrierung von fluiden Medien wird ein optimales und kontinuierliches Durchströmen der Einrichtung und des Filtergewebes auch bei variablem Durchsatz erreicht, wobei das Filtergewebe in optimaler Weise ausgenutzt wird.

Eine vorteilhafte Ausgestaltung der Erfindung besteht darin, dass der Einströmraum und der Ausströmraum durch zwei benachbarte Platten abgegrenzt wird, wobei das Filtergewebe zwischen den beiden Platten eingespannt und gehalten ist, so dass eine Filtrierebene gebildet wird. Durch diese Anordnung kann in sehr kompakter Bauweise eine sehr grosse Filtergewebefläche zur Verfügung gestellt werden, deren Ausnutzung optimal ist, wobei gewährleistet ist, dass der Durchfluss des zu filtrierenden Mediums kontinuierlich erfolgt, und die Verweilzeit in der Einrichtung zur Filtrierung gering ist.

In vorteilhafter Weise wird dieser Effekt noch gesteigert, wenn mehrere Filtrierebenen übereinander angeordnet sind.

Eine weitere vorteilhafte Ausgestaltung der Erfindung besteht darin, dass die erste Kammer die Form eines Hohlzylinders aufweist, um welchen die Einströmräume und die Ausströmräume radial angeordnet sind. Hierbei können die Platten, in welche die Einström- und Ausströmräume eingearbeitet sind, und das zwischen den Platten gehaltene Filtergewebe jeweils die Form einer Scheibe aufweisen. Die ringförmigen Platten und das Filtergewebe können danach über den Hohlzylinder gestülpt werden, wodurch eine platzsparende und kompakte Bauweise erreicht wird.

In vorteilhafter Weise wirken jeweils zwei Platten paarweise zusammen. Hierbei weist eine erste Platte einströmseitig einen ersten Ringkanal auf, der gegen den Hohlzylinder hin offen ist und ringflächenseitig je mit einem ersten Ringsteg abgeschlossen ist. Die Einströmräume sind jeweils in die beiden Oberflächen der ersten Platte eingelassen und münden in den ersten Ringkanal. Die zweite Platte weist ausströmseitig einen zweiten Ringkanal auf, der gegen die zweite Kammer hin offen ist und ringflächenseitig ebenfalls je mit einem zweiten Ringsteg abgeschlossen ist. Hierbei münden die Ausströmräume, die je in die beiden Oberflächen der zweiten Platte eingelassen sind, in den zweiten Ringkanal. Durch diese Anordnung kann die Höhe der Filtriereinrichtung bzw. die Anzahl der Platten und demzufolge die Grösse der Fläche der eingelegten Filtergewebe praktisch beliebig variiert werden, abhängig von den Anforderungen, die an diese Einrichtung zum Filtrieren gestellt werden.

Eine weitere vorteilhafte Ausgestaltung der Erfindung besteht darin, dass jeweils an den ersten und an den zweiten Ringstegen der Platten je ein umlaufender Vorsprung angebracht ist, wobei dieser Vorsprung bei paarweise zusammengefügten ersten und zweiten Platten bzw. ersten Platten und Abschlussplatten je in eine entsprechend geformte Ausnehmung der anderen Platte hineinragt. Hierdurch wird einerseits eine optimale gegenseitige Führung der einzelnen Platten und andererseits eine Zentrierung und Abdichtung für das scheibenförmige, zwischen die Platten eingelegte Filtergewebe erreicht.

In vorteilhafter Weise sind an den den Filtergeweben gegenüberliegenden Flächen der Platten Abstützelemente angebracht, mittels welchen das zwischen den Einström- und Ausströmräumen liegende Filtergewebe abgestützt werden kann und somit in einer optimalen Lage gehalten wird. Eine optimale Abstützung der Filtergewebe wird erreicht, wenn die Abstützelemente als radial verlaufende Rippen ausgebildet sind, die über ihre gesamte Länge eine im wesentlichen konstante Dicke aufweisen. Durch die radiale Ausrichtung der Rippen wird deren Abstand voneinander mit grösser werdendem Radius der Platten immer grösser. Damit das Filtergewebe auch in den äusseren Bereichen der Platten optimal abgestützt ist, werden etwa vom mittleren Bereich der Länge der Rippen her jeweils zwischen zwei Rippen eine ebenfalls radial nach aussen verlaufende Hilfsrippe angeordnet. Damit wird auch in diesem Bereich das Filtergewebe optimal abgestützt.

In vorteilhafter Weise kann in dem die erste Kammer bildenden Hohlzylinder eine Rückspülvorrichtung in Form eines entlang des Hohlkörpers verschiebbaren Kolbens angeordnet werden. Durch einen Kolben, welcher einen ringförmigen Abflusskanal aufweist, kann somit ein erster Ringkanal bzw. die Durchlassöffnungen abgedeckt werden, wodurch dieser Bereich der Einrichtung in bekannter Weise rückgespült werden kann, während die anderen Bereiche für die Filtrierung weiterhin zur Verfügung stehen.

Eine Ausführung der Erfindung wird nachfolgend anhand der beiliegenden Zeichnung beispielhaft näher erläutert.

Es zeigt:
**Fig. 1** einen Querschnitt einer Einrichtung zum Filtrieren eines flüssigen Mediums, welche eine zentral angeordnete erste Kammer mit darum angeordneten ringförmigen Platten und Filtergeweben aufweist;
**Fig. 2** eine Schnittdarstellung durch eine erste Platte einer Einrichtung nach Fig. 1 in radialer Richtung;
**Fig. 3** eine Draufsicht auf einen Teil einer ersten Platte;
**Fig. 4** eine Darstellung eines Teilschnitts durch eine erste Platte entlang Linie IV-IV gemäss Fig. 2;
**Fig. 5** eine Schnittdarstellung durch eine zweite Platte der Einrichtung gemäss Fig. 1 in radialer Richtung;
**Fig. 6** eine Draufsicht auf einen Teil einer zweiten Platte;
**Fig. 7** eine Darstellung eines Teilschnittes durch eine zweite Platte entlang Linie VII-VII gemäss Fig. 5;
**Fig. 8** eine schnittdarstellung durch eine Abschlussplatte gemäss der Einrichtung nach Fig. 1 in radialer Richtung;
**Fig. 9** eine Draufsicht auf die Abschlussplatte gemäss Fig. 8; und
**Fig. 10** eine Teilansicht eines Schnittes entlang Linie X-X gemäss Fig. 8.

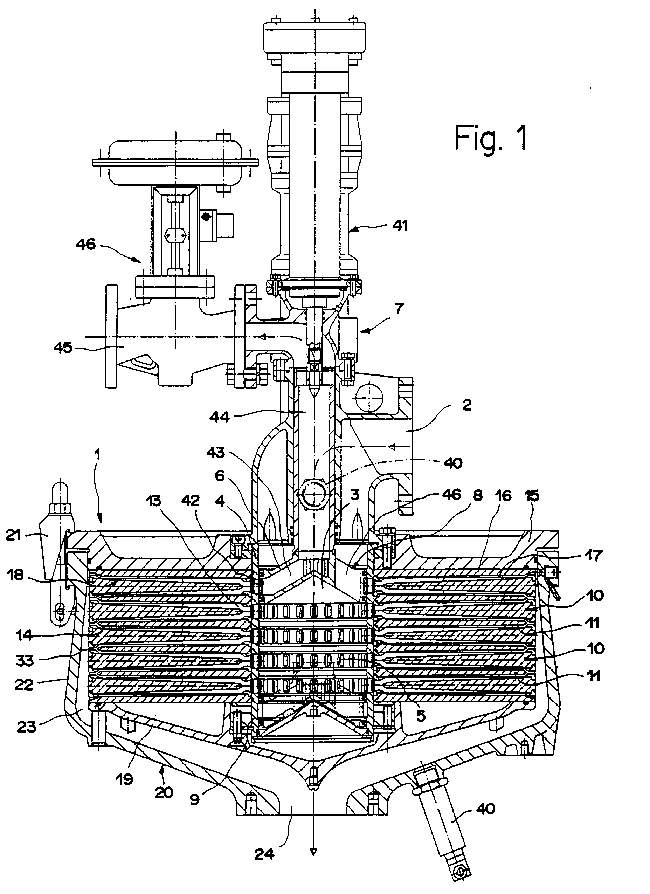

Die Einrichtung 1 zur Filtrierung von fluiden Medien besteht, wie aus Fig. 1 ersichtlich ist, aus einem Einlauf 2, der in eine erste Kammer 3 mündet. Die erste Kammer 3 wird durch einen Hohlzylinder 4 gebildet, in dessen Wandung Durchlassöffnungen 5 angebracht sind, die ringförmig angeordnet sind.

Längsverschiebbar im Hohlzylinder 4 ist ein Kolben 6 angebracht, welcher als Teil einer Rückspülvorrichtung 7 dient. In Fig. 1 ist der Kolben 6 in einer Rückspülposition 8 dargestellt, deren Funktion später noch beschrieben wird. Beim normalen Filtriervorgang befindet sich der Kolben 6 in einem verlängerten Bereich 9 des Hohlzylinders 4, welcher dicht abgeschlossen ist. Wenn sich der Kolben 6 im verlängerten Bereich 9 des Hohlzylinders 4 befindet, liegen alle Durchlassöffnungen 5 der ersten Kammer 3 frei.

Um den Hohlzylinder 4 sind ringförmige erste Platten 10 und ringförmige zweite Platten 11 angeordnet. In diese ersten und zweiten Platten 10 und 11 sind radial verlaufende Einströmräume 13 und Ausströmräume 14 eingearbeitet. In den ersten Platten 10 sind die Einströmräume 13 angeordnet, während in den zweiten Platten 11 die Ausströmräume 14 untergebracht sind. Die Einströmräume 13 der ersten Platte 10 und die Ausströmräume 14 der zweiten Platte 11 liegen jeweils übereinander, so dass die Durchströmung des Filtergewebes 17 optimal stattfinden kann.

Am einlaufseitigen Ende des die erste Kammer 3 bildenden Hohlzylinders 4 ist ein ringförmiger Deckel 15 befestigt. Ueber den Hohlzylinder 4 wird eine Abschlussplatte 16 geschoben, bis sie am Deckel 15 anliegt. Diese Abschlussplatte 16 ist auf der dem Deckel 15 abgewandten Oberfläche mit Ausnehmungen versehen, die den Ausströmraum bilden. Auf diese Abschlussplatte 16 wird ein scheibenförmiges Filtergewebe 17 aufgelegt. Danach wird eine erste Platte 10 auf den Hohlzylinder 4 aufgeschoben, so dass das Filtergewebe 17 zwischen dieser ersten Platte 10 und der Abschlussplatte 16 eingeklemmt ist. Die Einströmräume 13 der ersten Platte 10 und die Ausströmräume 14 der Abschlussplatte 16 bilden somit eine erste Filtrierebene 18, in welcher die radial verlaufenden Einströmräume 13 und Ausströmräume 14 angeordnet sind. Auf diese erste Platte 10 wird wiederum ein Filtergewebe 17 aufgelegt, wonach eine zweite Platte 11 angefügt wird. Danach erfolgt der weitere Aufbau des Filterteils der Einrichtung 1, indem abwechselnd erste Platten 10 und zweite Platten 11, zwischen welchen jeweils ein Filtergewebe 17 eingelegt wird, aufeinander geschichtet werden. Dabei kommt jeweils der Einströmraum 13 der ersten Platte 10 in den Bereich der Durchlassöffnungen 5 des Hohlzylinders 4 zu liegen. Den Abschluss des Filteraufbaus bildet wiederum eine Abschlussplatte 16, die auf die unterste erste Platte 10 zu liegen kommt, und die mit dem entsprechenden Ausströmraum ausgestattet ist.

Die untere Abschlussplatte 16 wird mit einem Innendeckel 19, welcher am Hohlzylinder 4 befestigt ist, verspannt.

Den gesamten Filteraufbau und den Innendeckel 19 umschliesst ein gefässförmiger Behälter 20, der mittels Spanneinrichtungen 21 am Deckel 15 befestigt ist. Dieser Behälter 20 bildet zwischen den übereinander geschichteten ersten Platten 10 und zweiten Platten 11 sowie den beiden Abschlussplatten 16 mit dazwischen angeordneten Filtergeweben 17 und dem Innendeckel 19 und seiner Behälterwand 22 die als zweite Kammer 23 wirkende äussere Ringkammer, in welche die Ringkanäle 33 der Ausströmteile 14 der zweiten Platte 11 münden. Der Behälter 20 ist mit einem Auslauf 24 ausgestattet.

Beim Filtrieren eines fluiden Mediums wird dieses über den Einlauf 2 unter einem Vordruck (beispielsweise etwa 10 bar) in die erste Kammer 3 geleitet. Von da gelangt das Medium über die Durchlassöffnungen 5 in die Einströmräume 13 der ersten Platten 10, durch das Filtergewebe 17 in die Ausströmräume 14 der zweiten Platten 11, von wo das filtrierte Medium in die äussere Ringkammer 23 ausfliesst. Diese äussere Ringkammer 23 weist in Flussrichtung des Filtriervorganges einen Durchflussquerschnitt auf, der im Bereich der Ringkanäle 33 der Ausströmräume 14 zunimmt und danach konstant bleibt und in den Auslauf 24 mündet.

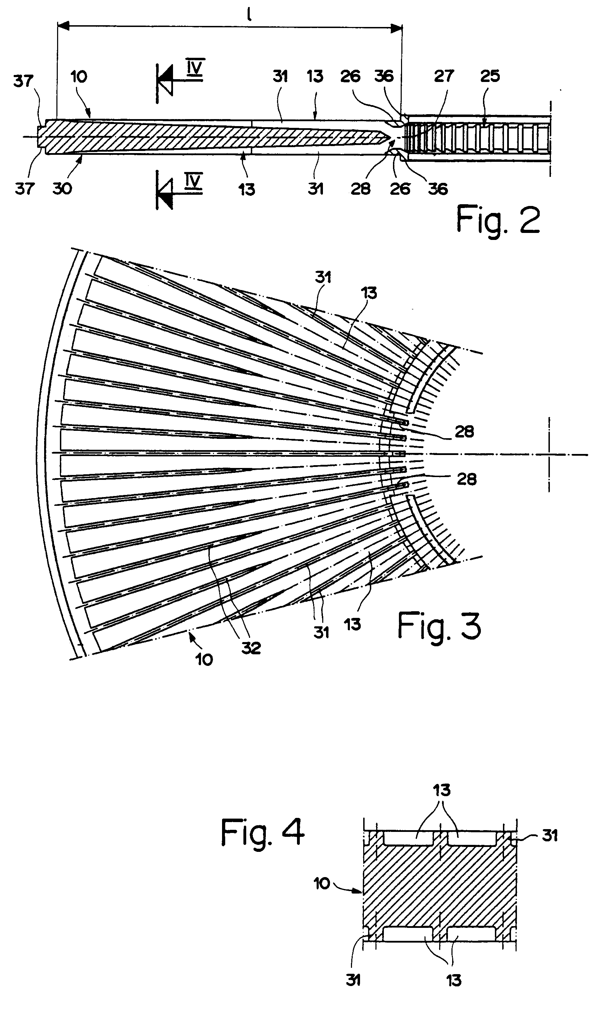

Die ersten Platten 10 weisen, wie aus Fig. 2 ersichtlich ist, einströmseitig einen ersten Ringkanal 25 auf. Dieser erste Ringkanal 25 ist gegen den Hohlzylinder 4 und insbesondere gegen die Durchlassöffnungen 5 des Hohlzylinders 4 (Fig. 1) hin offen, während er ringflächenseitig oben und unten je mit einem ersten Ringsteg 26 abgeschlossen ist, welche ihrerseits am Hohlzylinder 4 (Fig. 1) anliegen, und welche über Streben 27 mit dem Grundkörper der ersten Platte 12 verbunden sind.

In die beiden ringförmigen Oberflächen der ersten Platte 10 sind die Einströmräume 13 eingelassen, die im Bereich des einströmseitigen Endes 28 zusammenlaufen und in den Ringkanal 25 münden. Die Einströmräume 13 weisen gegen das ausströmseitige Ende 30 der ersten Platte 10 hin eine immer kleiner werdende Tiefe auf, wodurch sich der Durchströmungsquerschnitt verkleinert.

In einer Draufsicht auf einen Ausschnitt einer ersten Platte 10 gemäss Fig. 3 ist der Einströmraum 13 ersichtlich. In diesem Ausführungsbeispiel sind im Einströmraum 13 radial verlaufende Rippen 31 angebracht, durch welche das darauf zu liegen kommende Filtergewebe 17 abgestützt wird. Die Rippen 31 sind als Weiterführung der Streben 27 ausgebildet. Die Rippen 31 weisen über ihre gesamte Länge eine gleichbleibende Dicke auf. Demzufolge wird der gegenseitige Abstand dieser Rippen 31 mit grösser werdendem Radius der ersten Platte 10 grösser. Aus diesem Grunde ist etwa ab dem mittleren Bereich der Länge der Rippen 31 jeweils zwischen zwei Rippen 31 eine radial nach aussen verlaufende Hilfsrippe 32 angeordnet, wodurch eine zusätzliche Abstützung des Filtergewebes 17 erfolgt.

Im Querschnitt gemäss Fig. 4 sind die Rippen 31 ersichtlich, die jeweils die Einströmräume 13 begrenzen, wobei die Tiefe des Einströmraumes 13 in diesem Bereich nur noch gering ist.

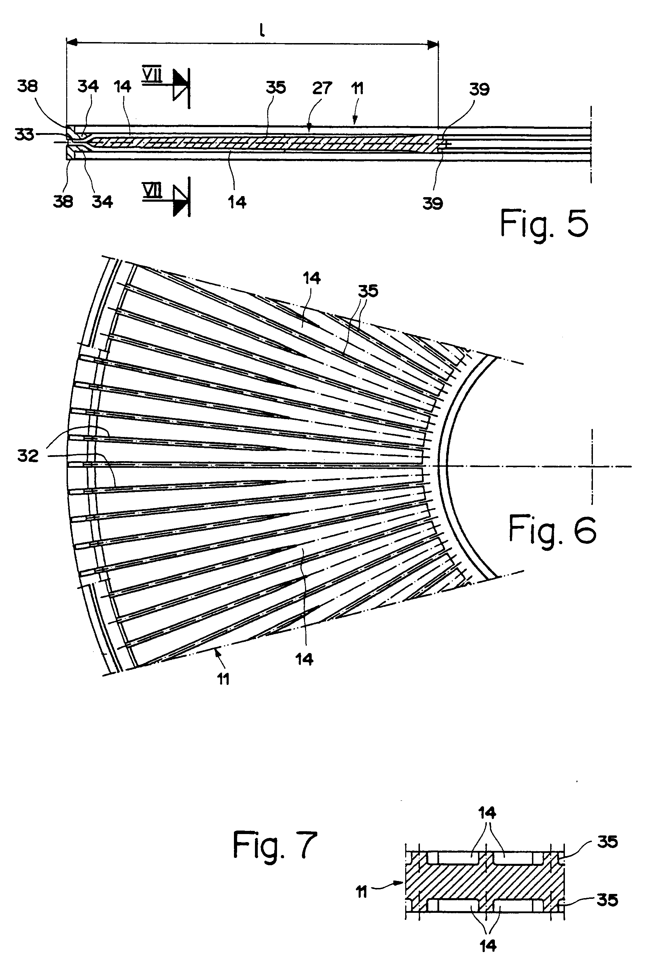

Der Aufbau der zweiten Platten 11 ist aus den Fig. 5 bis 7 ersichtlich. Jede zweite Platte 11 weist ausströmseitig einen zweiten Ringkanal 33 auf, der gegen die äussere Ringkammer 23 (Fig. 1) hin offen ist, und ringflächenseitig je mit einem zweiten Ringsteg 34 abgeschlossen ist. Diese Ringstege 34 sind über Streben mit der zweiten Platte 11 verbunden. Die Ausströmräume 14 sind jeweils in die beiden Oberflächen der zweiten Platte 11 eingearbeitet. In den Ausströmräumen 14 sind radial verlaufende Rippen 35 angebracht, die der Abstützung des Filtergewebes 17 dienen. Die Tiefe der Ausströmräume 14 nimmt mit kleiner werdendem Radius der zweiten Platte 11 ab.

Auch bei den zweiten Platten 11 weisen die Rippen 35 über ihre gesamte Länge die selbe Dicke auf. Auch die zweiten Platten 11 sind mit Hilfsrippen 32 ausgestattet, die zwischen die Rippen 35 zu liegen kommen.

Diese oben beschriebenen ersten Platten 10 und zweiten Platten 11 können nun so übereinandergelegt werden, dass die Rippen 31 der ersten Platte 10 und die Rippen 35 der zweiten Platte 11 bzw. der Abschlussplatten 16 übereinanderliegen. Es ist auch denkbar, dass die Platten 10, 11 bzw. 16 so übereinandergelegt werden, dass die entsprechenden Rippen 31 und 35 nicht übereinander zu liegen kommen, sondern versetzt zueinander ausgerichtet sind.

Zwischen die Platten wird ein Filtergewebe 17 (Fig. 1) gelegt, das zwischen den Ringstegen 26 bzw. 34 und den entsprechenden Bereichen der Platten 10, 11 bzw. 16 eingespannt wird, und durch die Rippen 31 und Rippen 35 gestützt wird. Durch dieses Filtergewebe 17 wird der Durchströmraum in den Einströmraum 13 und den Ausströmraum 14 unterteilt, wobei der Querschnitt des Einströmraumes am einströmseitigen Ende maximal ist, während er gegen das ausströmseitige Ende hin abnimmt. Der Querschnitt des Ausströmraumes 14 ist am einströmseitigen Ende minimal und nimmt gegen das ausströmseitige Ende hin auf einen maximalen Querschnitt zu. Der Gesamtquerschnitt des Durchströmraumes bleibt hierbei im wesentlichen konstant.

Anstelle der Rippen 31 bzw. 35 in den Einströmräumen 13 bzw. Ausströmräumen 14, die der Abstützung des Filtergewebes 17 dienen, können auch Abstützungen mit anderer Form verwendet werden. So können beispielsweise diese Abstützungen die Form von Stiften aufweisen, wobei diese übereinander oder versetzt angeordnet sein können, und so das Filtergewebe 17 abstützen.

Es ist auch denkbar, auf jegliche Abstützungen in den Einströmräumen 13 und den Ausströmräumen 14 zu verzichten, so dass das Filtergewebe 17 nur zwischen den jeweiligen Ringstegen 26 bzw. 34 in Zusammenwirkung mit der entsprechenden Auflage der benachbarten Platte ausgespannt ist.

Um die ersten Platten 10 und die zweiten Platten 11 gut aufeinanderlegen zu können, weist die erste Platte 10 an ihrem innenseitigen Rand im Bereich der ersten Ringstege 26 beidseits einen vorstehenden umlaufenden Vorsprung 36 auf, wie aus Fig. 2 ersichtlich ist. Aussenseitig ist die erste Platte 10 beidseitig mit einer umlaufenden Ausnehmung 37 ausgestattet. Wie in Fig. 5 dargestellt ist, ist jede zweite Platte 11 aussenseitig mit einem beidseits vorstehenden und umlaufenden Vorsprung 38 versehen, während innenseitig jeweils eine umlaufende Ausnehmung 39 angebracht ist. Beim Aufeinanderlegen der ersten Platte 10 und der zweiten Platte 11 ragt der Vorsprung 36 der ersten Platte in eine Ausnehmung 39 der zweiten Platte, während der Vorsprung 38 der zweiten Platte 11 in die entsprechende Ausnehmung 37 der ersten Platte 10 hineinragt. Dadurch wird eine Zentrierung der beiden Platten erreicht, und das Filtergewebe 17 kann problemlos positioniert, verspannt und abgedichtet werden.

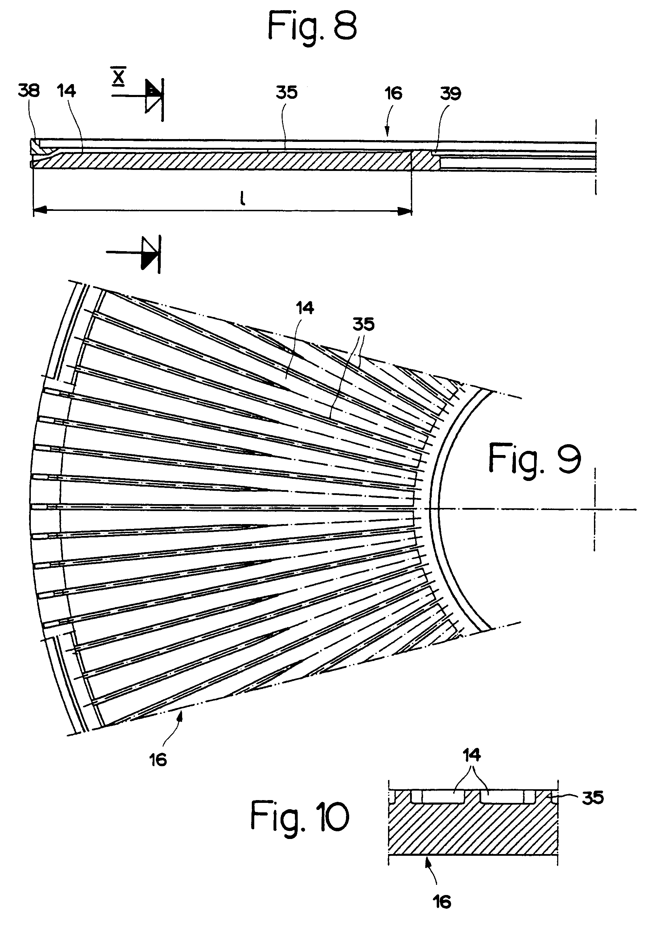

Die in den Fig. 8 bis 10 dargestellte Abschlussplatte 16 ist gleich aufgebaut, wie die zweite Platte 11, weist jedoch nur an einer ihrer ringförmigen Oberflächen Ausströmräume 14 auf, während die dem Filtergewebe abgewandte äussere Oberfläche eben ausgestaltet ist. Jeweils eine dieser Abschlussplatten 16 dient als Abschluss eines gemäss Fig. 1 aufgebauten Filterpakets.

Mit diesem Aufbau einer Einrichtung zur Filtrierung von fluiden Medien wird durch die Anordnung und Ausgestaltung der Bereiche, die vom Medium durchströmt werden, ein optimaler und kontinuierlicher Strom des Mediums erreicht, wobei die Durchströmungsgeschwindigkeit des Mediums in der Filtriereinrichtung gleichbleibend ist. Durch diese Anordnung wird ausserdem eine grosse Filtrierfläche zur Verfügung gestellt.

Wenn die Einrichtung 1 gemäss Fig. 1 eine gewisse Zeit in Betrieb gestanden ist, und sich demzufolge die aus dem Medium ausgefilterten Rückstände auf dem Filtergewebe 17 festsetzen, steigt der Druck des unfiltrierten Mediums in der ersten Kammer 3, der um ein gewisses Mass höher ist als der Druck in der zweiten Kammer 23, leicht an. Dieser Druckanstieg (Differenzdruck) kann durch die beiden Druckfühler 40 festgestellt werden. Der Regelkreis der Druckfühler 40 bewirkt dann, dass die Rückspülvorrichtung 7 eingesetzt wird. Hierzu wird der Kolben 6 über einen Linearantrieb 41 aus dem verlängerten Bereich 9 des Hohlzylinders 4 auf eine beliebige Rückspülposition der ringförmig angebrachten Durchlassöffnungen 5 gebracht. Der Kolben 6 deckt dadurch einen Ring von Durchlassöffnungen 5 mit einem an der Kolbenfläche angebrachten Ringkanal 42 ab. Der Ringkanal 42 ist über radial angeordnete Oeffnungen 43 mit der hohlen Kolbenstange 44 verbunden. Die hohle Kolbenstange 44 mündet in eine Abscheidungsleitung 45.

In jeder Rückspülposition des Kolbens 6 wird weiterhin zu filtrierendes Medium durch den Einlauf 2 in die erste Kammer 3 geführt, wobei dieses Medium durch die zwischen den Radialöffnungen 43 vorhandenen axialen Oeffnungen 46 den Kolben 6 durchströmt. Dieses Medium gelangt durch die nicht durch den Kolben 6 abgedeckten Durchlassöffnungen 5, durch die Einströmräume 13, das Filtergewebe 17 und die Ausströmräume 14 in die zweite Kammer 23. Sobald der Kolben 6 auf eine Rückspülposition gefahren ist, wird ein kleiner Teil des filtrierten Mediums aus der Kammer 23 durch die entsprechenden Ausströmräume 14 in Gegenrichtung durch das Filtergewebe 17 geleitet, hierbei werden die am Filtergewebe 17 haftenden ausgefilterten Rückstände weggespült, und durch die Einströmräume 14 in die Durchlassöffnungen 5 in den Ringkanal 42 des Kolbens bringt, von wo dieses mit Filtrierrückständen versehene Medium durch die Radialöffnungen 43 und die hohle Kolbenstange 44 der Abscheidungsleitung 45 zugeführt wird.

Dieser Rückspülvorgang kann durch Verschieben des Kolbens 6 im Hohlzylinder 4 auf eine andere Reihe von Durchlassöffnungen 5 für alle in der Einrichtung 1 angeordneten Filtergewebe 17 erfolgen, während der Filtriervorgang weiterhin stattfinden kann. Demzufolge ist es nicht erforderlich, den Filtriervorgang zur Rückspülung und Reinigung des Filtergewebes 17 zu unterbrechen.

Die Menge des mit Filterrückständen versehenen Rückspülmediums kann durch ein Regelventil 46 sowie der Verweilzeit des Kolbens 6 in einer Rückspülposition bestimmt werden.

Der Einsatz einer derartigen Filtriereinrichtung ist praktisch für jede Art fluider Medien denkbar.

## Patentansprüche

1. Einrichtung zur Filtrierung von fluiden Medien, bestehend aus einer mit einem Einlauf versehenen ersten Kammer, einer mit einem Auslauf versehenen zweiten Kammer, in welcher die erste Kammer mit Durchgangsöffnungen versehen ist, die in mindestens einen Einströmraum (13) münden, der in Strömungsrichtung eine Länge (l) aufweist, wobei mindestens entlang eines Teils der Länge (l) des Einströmraums (13) ein im wesentlichen parallel dazu verlaufender Ausströmraum (14) angeordnet ist, der gegen die zweite Kammer (23) hin offen ist, und zwischen dem Einströmraum (13 und dem Ausströmraum (14) entlang der Länge (l) ein Filtergewebe (17) angebracht ist, welches die beiden Räume unterteilt, dadurch gekennzeichnet, dass der Einströmraum (13) und der Ausströmraum (14) einen Durchströmraum bilden, der über die gesamte Länge (l) einen im wesentlichen konstanten Durchströmquerschnitt aufweist, und dass der Einströmraum (13) an seinem an die Durchgangsöffnungen anschliessenden einströmseitigen Ende (28) einen maximalen Querschnitt aufweist, der im wesentlichen dem Durchströmquerschnitt entspricht, und der entlang der Länge (l) gegen dessen ausströmseitiges Ende (30) hin abnimmt, während der Querschnitt des Ausströmraumes (14) an seinem einströmseitigen Ende minimal ist und entlang der Länge (l) gegen das ausströmseitige Ende hin auf einen maximalen Querschnitt, der im wesentlichen dem Durchströmquerschnitt entspricht, entsprechend zunimmt.

2. Einrichtung nach Anspruch 1, dadurch gekennzeichnet, dass der Einströmraum (13) und der Ausströmraum (14) durch zwei benachbarte Platten (10; 11; 16) abgegrenzt sind, wobei das Filtergewebe (17) zwischen den beiden Platten (10; 11; 16) eingespannt und gehalten ist, 50 dass eine Filtrierebene (18) gebildet wird.

3. Einrichtung nach Anspruch 2, dadurch gekennzeichnet, dass mehrere Filtrierebenen (18) übereinander angeordnet sind, und dass die die Filtrierebenen (18) bildenden, übereinanderliegenden Platten (10, 11) mit dazwischenliegenden Filtergeweben (17) beidseits mit je einer Abschlussplatte (16) versehen sind.

4. Einrichtung nach Anspruch 2 oder 3, dadurch gekennzeichnet, dass die erste Kammer (3) durch einen Hohlzylinder (4) gebildet ist, um welchen die Filtrierebenen (18) radial angeordnet sind, wobei die Platten (10, 11, 16) und das Filtergewebe (17) je die Form einer Scheibe aufweisen, welche auf den Hohlzylinder (4) aufsetzbar sind, und dass die zweite Kammer (23) durch eine die Platten (10, 11, 16) und die Filtergewebe (17) umgebende Behälterwand (22) gebildet ist.

5. Einrichtung nach Anspruch 4, dadurch gekennzeichnet, dass zwei Platten (10) und (11) bzw. (10) und (16) jeweils paarweise zusammenwirken, wobei eine erste Platte (10) einströmseitig einen ersten Ringkanal (25) aufweist, der gegen den Hohlzylinder (4) hin offen ist und ringflächenseitig je mit einem ersten Ringsteg (26) abgeschlossen ist, dass die Einströmräume (13) je in die beiden Oberflächen der ersten Platte (10) eingelassen sind und in den ersten Ringkanal (25) münden, während eine zweite Platte (11) ausströmseitig einen zweiten Ringkanal (33) aufweist, der gegen die zweite Kammer (23) hin offen ist und ringflächenseitig je mit einem zweiten Ringsteg (34) abgeschlossen ist, dass die Ausströmräume (14) je in die beiden Oberflächen der zweiten Platte (11) eingelassen sind und in den zweiten Ringkanal (33) münden, und dass jeweils ein Filtergewebe (17) zwischen einem ersten Ringsteg (26) und der zweiten Platte (11) bzw. Abschlussplatte (16) und einem zweiten Ringsteg (34) und der ersten Platte (10) eingespannt ist.

6. Einrichtung nach Anspruch 5, dadurch gekennzeichnet, dass in der Wandung des Hohlzylinders (4) Durchlassöffnungen (5) angebracht sind, die derart ringförmig angeordnet sind, dass jeder Ring von Durchlassöffnungen (5) in den Bereich eines ersten Ringkanals (25) zu liegen kommt.

7. Einrichtung nach Anspruch 5 oder 6, dadurch gekennzeichnet, dass an den ersten Ringstegen (26) und an den zweiten Ringstegen (34) je ein umlaufender Vorsprung (36) angebracht ist, welcher bei paarweise zusammengefügten ersten Platten (10) und zweiten Platten (11) bzw. ersten Platte (10) und Abschlussplatten (16) je in eine entsprechend geformte Ausnehmung (37) hineinragt, die einerseits als gegenseitige Führungen und andererseits als Zentrierung und Abdichtung für das scheibenförmige, zwischen die Platten (10, 11, 16) eingelegte Filtergewebe (17) dienen.

8. Einrichtung nach einem der Ansprüche 4 bis 7, dadurch gekennzeichnet, dass das Filtergewebe (17) durch an den Platten (10, 11, 16) angebrachten Abstützelementen (31, 32, 35) jeweils zwischen den entsprechenden Einströmräumen (13) und den Ausströmräumen (14) abgestützt ist.

9. Einrichtung nach Anspruch 8, dadurch gekennzeichnet, dass die Abstützelemente als radial verlaufende Rippen (31, 35; 32) angeordnet sind, die an den jeweiligen Platten (10, 11, 16) angebracht sind, und die sich über einen Teil oder über die gesamte Länge (l) der jeweiligen Platte (10, 11, 16) erstrecken und eine im wesentlichen konstante Dicke aufweisen.

10. Einrichtung nach einem der Ansprüche 4 bis 9, dadurch gekennzeichnet, dass im den die erste Kammer (3) bildenden Hohlzylinder (4) eine Rückspülvorrichtung (7) in Form mindestens eines entlang des Hohlzylinders (4) verschiebbaren Kolbens (6) angeordnet ist, mittels welchen jeweils ein Ring von Durchlassöffnungen (5) abdeckbar ist, dass im Kolben (6) ein Ringkanal (42) angeordnet ist, über welchen die abgedecktem Durchlassöffnungen (5) mit einer Abscheidungsleitung (45) verbunden sind.

11. Einrichtung nach Anspruch 10, dadurch gekennzeichnet, dass der bzw. die Kolben (6) in eine ausser Eingriff stehende Position bringbar ist bzw. sind, in welcher alle Durchlassöffnungen (5) unverdeckt sind und der Durchfluss des zu filtrierenden Mediums durch alle Durchlassöffnungen (5) und durch alle Einströmräume (13) und Ausströmräume (14) erfolgt.

## Claims

1. Apparatus for filtering fluid media, consisting of a first chamber provided with an inlet, a second chamber provided with an outlet, in which apparatus the first chamber is provided with openings, which open out into at least one intake space (13), which has a length (l) in the direction of flow, a discharge space (14) being disposed along at least a portion of the length (l) of the intake space (13), running essentially parallel thereto, which discharge space is open toward the second chamber (23), and a filter fabric (17) is disposed along the length (l) between the intake space (13) and the discharge space (14), which filter fabric divides the two spaces, characterised in that the intake space (13) and the discharge space (14) form a flow-through space, which has an essentially constant flow-through cross-section over the entire length (l) and in that the intake space (13) has a maximal cross-section at its intake end (28) adjacent to the openings, which corresponds essentially to the flow-through cross-section, and which decreases along the length (l) toward its discharge end (30), while the cross-section of the discharge space (14) is minimal at its intake end, and along the length (l) toward the discharge end increases correspondingly to a maximal cross-section, which corresponds essentially to the flow-through cross-section.

2. Apparatus according to claim 1, characterised in that the intake space (13) and the discharge space (14) are bounded by two adjacent plates (10; 11; 16), the filter fabric (17) being clamped and held between the two plates (10; 11; 16) so that a filtering plane is formed.

3. Apparatus according to claim 2, characterised in that a plurality of filtering planes (18) are disposed over one another, and in that the plates (10; 11) lying over one another forming the filtering planes (18) are provided with filter fabrics (17) lying there-between with one closure plate each on both sides.

4. Apparatus according to claim 2 or 3, characterised in that the first chamber (3) is formed by a hollow cylinder (4), about which the filtering planes (18) are radially disposed, the plates (10, 11, 16) and the filter fabric (17) each having the shape of a disk, which can be set on the hollow cylinder (4), and in that the second chamber (23) is formed by a container wall (22) surrounding the plates (10, 11, 16) and the filter fabric (17).

5. Apparatus according to claim 4, characterised in that two plates (10) and (11) or (10) and (16), respectively, co-operate in pairs in each case, a first plate (10) having on the intake side a first ring channel (25), which is open toward the hollow cylinder (4) and on the annular surface side is closed off with one first ring land (26) each, in that the intake spaces (13) are each incorporated in the two surfaces of the first plate (10) and open out into the first ring channel (25), while a second plate (11) on the discharge side has a second ring channel (33), which is open toward the second chamber (23) and is closed off on the annular surface side with a second ring land (34) in each case, in that the discharge spaces (14) are each incorporated in the two surfaces of the second plate (11) and open out into the second ring channel (33), and in that in each case a filter fabric (17) is clamped between a first ring land (26) and the second plate (11), or respectively the closure plate (16), and between a second ring land (34) and the first plate (10).

6. Apparatus according to claim 5, characterised in that disposed in the wall of the hollow cylinder (4) are ports (5), which are disposed in rings in such a way that each ring of ports (5) comes to lie in the vicinity of a first ring channel (25).

7. Apparatus according to claim 5 or 6, characterised in that provided on the first ring land (26) and on the second ring land (34) is one encircling projection each, which each projects into a correspondingly shaped recess (37), when first plates (10) and second plates (11), or respectively first plate (10) and closure plates (16), are joined in pairs, serving, on the one hand, as mutual guides, and, on the other hand, as centring and sealing for the disk-shaped filter fabric (17) placed between the plates (10, 11, 16).

8. Apparatus according to one of the claims 4 to 7, characterised in that the filter fabric (17) is supported by support elements (31, 32, 35) fixed on the plates (10, 11, 16) in each case between the corresponding intake spaces (13) and the discharge spaces (14).

9. Apparatus according to claim 8, characterised in that the support elements are disposed as radially running ribs (31, 35; 32), which are fixed to the respective plates (10, 11, 16), and which extend over part or all of the length (l) of the respective plates and have essentially a constant thickness.

10. Apparatus according to one of the claims 4 to 9, characterised in that disposed in the hollow cylinder (4) forming the first chamber (3) is a backflushing device (7) in the form of at least one piston (6) displaceable along the hollow cylinder (4), by means of which a ring of ports (5) at a time can be covered, in that a ring channel (42) is disposed in the piston (6) through which the covered ports (5) are connected with a sedimentation line (45).

11. Apparatus according to claim 10, characterised in that the piston or respectively pistons (6) can be brought into a disengaged position in which all ports (5) are uncovered, and the passage of the medium to be filtered results through all ports (5) and through all intake spaces (13) and discharge spaces (14).

## Revendications

1. Dispositif de filtrage de fluides, comprenant une première chambre munie d'une entrée, une deuxième chambre munie d'une sortie, dans lequel la première chambre est munie d'ouvertures de passage qui débouchent dans au moins une chambre d'admission (13) comprenant une longueur (l) dans la direction du flux, une chambre d'échappement (14) étant disposée au moins sur une portion de la longueur (l) de la chambre d'admission (13), essentiellement parallèlement à celle-ci, qui est ouverte contre la deuxième chambre (23), un filtre de tissu (17) étant disposé entre la chambre d'admission (13) et la chambre d'échappement (17) le long de la longueur (l), reliant les deux chambres, caractérisé en ce que la chambre d'admission (13) et la chambre d'échappement (14) forment une chambre de passage de flux possédant une section de passage de flux essentiellement constante sur toute la longueur (l), et en ce que la chambre d'admission (13) possède une section maximum à son extrémité d'admission (28) reliée à l'ouverture de passage, correspondant essentiellement à la section de passage du flux, et qui diminue le long de la longueur (l) vers son extrémité d'échappement (30), alors que la section de la chambre d'échappement (14) est minimum à son extrémité d'admission et augmente le long de la longueur (l) vers l'extrémité d'échappement jusqu'à une section maximum correspondant essentiellement à la section de passage du flux.

2. Dispositif selon la revendication 1, caractérisé en ce que la chambre d'admission (13) et la chambre d'échappement (14) sont limitées par deux plaques voisines (10;11;16) le filtre de tissu (17) étant tendu et maintenu entre les deux plaques (10;11;16) afin de former un plan de filtrage (18).

3. Dispositif selon la revendication 2, caractérisé en ce que plusieurs plans de filtrage (18) sont superposés, et en ce que les plaques (10,11) superposées formant les plans de filtrage (18) avec les filtres de tissu (17) intercalés, sont munies sur chacun des côtés d'une plaque de terminaison (16).

4. Dispositif selon l'une des revendications 2 ou 3, caractérisé en ce que la première chambre (3) est formée d'un cylindre creux (4) autour duquel les plans de filtrage (18) sont disposés radialement, les plaques (10,11,16) et le filtre de tissu (17) ayant chacun une forme de disque, lesquels peuvent être installés sur le cylindre creux (4), et en ce que la deuxième chambre (23) est formée par une paroi de conteneur (22) entourant les plaques (10,11,16) et les filtres de tissu (17).

5. Dispositif selon la revendication 4, caractérisé en ce que deux plaques (10) et (11) respectivement (10) et (16) fonctionnent ensemble chaque fois par paire, une première plaque (10) comprend un premier canal en anneau (25) du côté de l'admission, qui est ouvert contre le cylindre creux (4) et qui est fermé par une première barrette en anneau (26) du côté plat de l'anneau, en ce que les chambres d'admission (13) sont chacune encastrées dans les deux surfaces supérieures de la première plaque (10) et débouchent dans le premier canal en anneau (25), alors qu'une deuxième plaque (11) comprend un deuxième canal en anneau (33) du côté de l'écoulement, qui est ouvert contre la deuxième chambre (23) et qui est fermé par une deuxième barrette en anneau (34) du côté plat de l'anneau, en ce que les chambres d'échappement (14) sont chacune encastrées dans les deux surfaces supérieures de la deuxième plaque (11) et débouchent dans le deuxième canal en anneau (33), et en ce que chaque fois un filtre en tissu (17) est tendu entre une première barrette en anneau (26) et la deuxième plaque (11), respectivement la plaque de terminaison (16) et une deuxième barrette en anneau (34) et la première plaque (10).

6. Dispositif selon la revendication 5, caractérisé en ce que des ouvertures de passage (5) sont aménagées dans la paroi du cylindre creux (4), qui sont disposées comme une forme d'anneau, et en ce que chaque anneau d'ouvertures de passage (5) est situé dans la région d'un premier canal en anneau (25).

7. Dispositif selon l'une des revendications 5 ou 6, caractérisé en ce qu'une partie circulaire en saillie (36) est disposée sur les premières barrettes en anneau (26) et sur les deuxièmes barrettes en anneau (34), qui pénètre dans des logements creux (37) adaptés des premières plaques (10) et deuxièmes plaques (11), respectivement première plaque (10) et plaques de terminaison (16) assemblées en paires, servant d'un côté de guidages mutuels et de l'autre côté de centrages et d'étanchéité du filtre en tissu (17) en forme de disque disposé entre les plaques (10,11,16).

8. Dispositif selon l'une des revendications 4 à 7, caractérisé en ce que le filtre en tissu (17) est supporté par des éléments de support (31,32,35) disposés sur les plaques (10,11,16) chaque fois entre les chambres d'admission (13) et les chambres d'échappement (14) correspondantes.

9. Dispositif selon la revendication 8, caractérisé en ce que les éléments de support sont disposés en nervures (31,35;32) s'étendant radialement, qui sont disposées sur les plaques (10,11,16) respectives et qui s'étendent par dessus une partie ou la totalité de la longueur (l) de la plaque respective, et possèdent une largeur essentiellement constante.

10. Dispositif selon l'une des revendications 4 à 9, caractérisé en ce qu'un dispositif de rétrolavage (7), sous la forme d'au moins un piston (6) déplaçable le long du cylindre creux (4) est disposé dans le cylindre creux (4) formant la première chambre (3), au moyen duquel chaque fois un anneau d'ouvertures de passage (5) peut être recouvert, et en ce qu'un canal annulaire (42) est disposé dans le piston (6), par lequel les ouvertures de passage (5) recouvertes, sont reliées à une conduite de coupure (45).

11. Dispositif selon la revendication 10, caractérisé en ce que le, respectivement les, piston (6) peut, respectivement peuvent, être amené en une position stable hors d'engagement, dans laquelle toutes les ouvertures de passage (5) sont découvertes, permettant le passage du fluide à filtrer par toutes les ouvertures de passage (5) et par toutes les chambres d'admission (13) et chambres d'échappement (14).
